(19) Europäisches Patentamt
European Patent Office
Office européen des brevets

(11) **EP 0 783 461 B1**

## (12) FASCICULE DE BREVET EUROPEEN

(45) Date de publication et mention
de la délivrance du brevet:
**27.10.1999 Bulletin 1999/43**

(21) Numéro de dépôt: **95931860.1**

(22) Date de dépôt: **22.09.1995**

(51) Int. Cl.$^6$: **C02F 1/66**

(86) Numéro de dépôt international:
**PCT/BE95/00087**

(87) Numéro de publication internationale:
**WO 96/09251 (28.03.1996 Gazette 1996/14)**

(54) **PROCEDE DE TRAITEMENT D'EFFLUENTS ACIDES**

VERFAHREN ZUR AUFBEREITUNG VON SAUREN ABFLÜSSEN

METHOD FOR PROCESSING ACID EFFLUENTS

(84) Etats contractants désignés:
**BE DE FR LU NL**

(30) Priorité: **22.09.1994 BE 9400859**

(43) Date de publication de la demande:
**16.07.1997 Bulletin 1997/29**

(73) Titulaire:
**S.A. LHOIST RECHERCHE ET
DEVELOPPEMENT
B-1342 Ottignies-Louvain-La-Neuve (BE)**

(72) Inventeurs:
• **LANGELIN, Henri, René
F-62132 Caffiers (FR)**

• **COLOMBIER, Simon
F-91250 Saint-Germain-les-Corbeil (FR)**

(74) Mandataire: **Claeys, Pierre et al
Gevers & Vander Haeghen,
Patent Attorneys,
Rue de Livourne 7
1060 Brussels (BE)**

(56) Documents cités:
**CH-A- 379 416        DE-A- 4 124 073
DE-A- 4 132 679        DE-C- 737 802
DE-C- 838 138**

**Description**

La présente invention a pour objet un procédé de traitement par voie humide d'effluents contenant de l'acide sulfurique, du $SO_2$ libre, du $SO_3^-$ ou de $SO_4^=$.

Ces effluents proviennent par exemple d'étape de lavage de fumées au moyen d'eau.

Ces effluents liquides contiennent de l'acide sulfurique et ne peuvent dès lors être rejetés dans les rivières. Jusqu'à présent, on a traité ces effluents au moyen de $CaCO_3$ ou de chaux, donnant comme sous-produit du gypse $CaSO_4.xH_2O$, c'est-à-dire donnant des montagnes de déchets qui doivent être stockés ou épandus.

La présente invention vise à remédier à cet inconvénient mais également à permettre la récupération d'un sous-produit valorisable à savoir le sulfate de magnésium.

Le procédé selon l'invention est un procédé de traitement par voie humide d'effluents contenant du $H_2SO_4$, du $SO_2$ libre, du $SO_3^-$ ou du $SO_4^=$ et présentant un pH inférieur à 5, dans lequel on fait réagir ces effluents avec un composé basique. Dans le procédé selon l'invention, on utilise des particules de $CaCO_3.MgCO_3$, de $MgCO_3$ ou un mélange de celles-ci, éventuellement en mélange à du $CaCO_3$ pour traiter lesdits effluents, lesdites particules ayant une granulométrie telle qu'au moins 95 %, de préférence environ 100% des particules de $CaCO_3.MgCO_3$ et/ou $MgCO_3$ ont une granulométrie inférieure à 75 $\mu$m. On récupère après traitement du sulfate de magnésium sous forme de solution ou de saumure.

De préférence pour obtenir un traitement très efficace, lesdites particules de $CaCO_3.MgCO_3$ et/ou $MgCO_3$ ont une granulométrie telle que le diamètre médian $d_{50}$ (50% en poids des particules ayant une granulométrie supérieure audit diamètre médian) est compris entre 3 et 30 $\mu$m, en particulier entre 5 et 20 $\mu$m, et de façon plus particulière est égal à environ 10 $\mu$m.

Des essais ont démontré que l'utilisation de particules de $CaCO_3$ et de dolomie de granulométrie supérieure à 100 $\mu$m entraînait une neutralisation lente et donc non industrielle de solutions acides. De telles particules n'étaient donc pas à même d'être utilisées pour valoriser des effluents liquides acides en saumure de sulfate de magnésium ou sous forme de $MgSO_4.xH_2O$.

D'autres essais ont démontré que l'utilisation de particules de $CaCO_3$ et de dolomie de granulométrie trop fine (moins de 3 $\mu$m) pour la neutralisation d'effluents liquides acides était à proscrire industriellement vu les coûts de l'opération de broyage, vu le faible gain en temps de neutralisation, vu les problèmes de dosage et donc les risques d'utiliser des quantités de dolomie excédentaires, c'est-à-dire des risques de rejet de particules de dolomie qui n'ont pas réagi, lors de la séparation de la phase liquide contenant du sulfate de magnésium.

Enfin, le mélange de trop fines particules solides de dolomie à des effluents liquides est difficile et une source de problèmes.

On a donc remarqué qu'il y avait lieu d'utiliser des particules de $MgCO_3$ ou de dolomie de granulométrie bien déterminée pour assurer un traitement industriel optimal.

Du fait que les particules utilisées dans le procédé selon l'invention ont une granulométrie optimale, elles peuvent aisément être mélangées et dispersées à la solution acide (dispersion sensiblement homogène), de sorte que la génération sensiblement "homogène" d'une phase gazeuse dans la solution (génération d'une phase gazeuse aussi bien dans les couches supérieures que les couches inférieures de la solution à neutraliser) favorisera le mélange des particules, un meilleur contact solide-liquide et donc une meilleure réaction.

Les particules de $MgCO_3$ et/ou $CaCO_3.MgCO_3$ utilisées dans le procédé suivant l'invention ont avantageusement une répartition granulométrique large. Leur facteur de répartition à 80%, et même à 90% est de préférence supérieur à 1,5, en particulier supérieur à 1,9 (par exemple égal à environ 2).

Les facteurs granulométriques à 90% et 80% sont calculés comme suit :

$$F_{90\%} = \frac{\phi_{90\%} - \phi_{10\%}}{(\phi_{90\%} + \phi_{10\%})/2}$$

$$F_{80\%} = \frac{\phi_{80\%} - \phi_{20\%}}{(\phi_{80\%} + \phi_{20\%})/2}$$

avec

$\phi_{x\%}$ : le diamètre maximum des particules de la fraction passante correspondant à x% en poids des particules.

Dans une forme de réalisation, on neutralise les effluents en deux étapes, en utilisant par exemple dans chacune desdites étapes de la dolomie avec un taux de particules passantes à 60 μm supérieur à 90 %, et moins de 30% de particules passantes à 3 μm.

Selon une forme de réalisation, on traite les effluents acides dans une première étape au moyen de particules de $CaCO_3.MgCO_3$ et/ou $MgCO_3$ et dans une deuxième étape au moyen d'un oxyde et/ou hydroxyde d'un métal alcalin ou alcalino-terreux, en particulier $CaO.MgO$ et/ou $MgO$.

Cet oxyde et/ou hydroxyde peut être un dérivé de sodium tel que du bicarbonate de sodium, mais est de préférence choisi parmi $Ca(OH)_2$, $Mg(OH)_2$, $CaO$, $MgO$, $CaO.MgO$, $Ca(OH)_2.Mg(OH)_2$ ou un mélange de ceux-ci, les laits de chaux ($Ca(OH)_2$ ; $Mg(OH)_2$ ; $Ca(OH)_2.Mg(OH)_2$).

Par exemple, on traite les effluents dans la première étape jusqu'à l'obtention d'un pH compris entre 3 et 5 et dans la deuxième étape jusqu'à l'obtention d'un pH supérieur à 6, de préférence supérieur à 7.

La quantité de cet oxyde et/ou hydroxyde est avantageusement inférieure à 15 %, de préférence inférieure ou égale à 10 % de la quantité de $CaCO_3.MgCO_3$ et/ou $MgCO_3$ éventuellement mélangé à du $CaCO_3$ utilisée dans la première étape.

L'utilisation de cet hydroxyde et/ou hydroxyde permet une neutralisation rapide de l'effluent déjà préneutralisé, par exemple déjà préneutralité jusqu'à un pH de 5.

Dans une forme de réalisation particulièrement préférée, on neutralise des effluents acides ($H_2SO_4$) en deux étapes, à savoir :

- jusqu'à un pH de 3 à 5, voire 6, au moyen de particules de dolomie broyée avec un taux de particules passantes à 70 μm supérieur à 95 % et un $d_{50}$ compris entre 6 et 15 μm, et
- au moyen d'un oxyde et/ou hydroxyde de métal alcalin ou alcalino-terreux, de préférence $MgO$ ou $MgO.CaO$ jusqu'à un pH final désiré, en particulier un pH neutre.

L'utilisation de $MgO$, $MgO.CaO$ et de dolomie cuite dans la dernière étape permet d'obtenir des solutions très concentrées en $MgSO_4$ ou des saumures de $MgSO_4$.

Les solutions de $MgSO_4$ ou saumures peuvent être concentrées par des techniques diverses, telles que évaporation ou des techniques à membranes telles que osmose inverse.

Ces solutions ou saumures peuvent ainsi être utilisées pour la préparation de sulfate de magnésium sous forme solide, en particulier sous forme d'hydrate $MgSO_4.xH_2O$.

Des particularités et détails de l'invention ressortiront de la description des exemples suivants :

## Exemple 1

On a neutralisé une solution contenant 100 g/l de $H_2SO_4$ au moyen de $CaCO_3$ broyé sous forme de granulats (granulométrie > 1 cm).

La quantité de $CaCO_3$ utilisé était de ± 130 g par litre de solution. Cette réaction de neutralisation était rapide et a donné comme produit de réaction une suspension contenant ± 170-175 g de sulfate de calcium dihydrate/litre.

La réaction de neutralisation peut être représentée comme suit :

$$CaCO_3 + H_2SO_4 + 2H_2O \rightarrow CaSO_4.2H_2O \text{ (s)} + CO_2 \uparrow + H_2O.$$

Cette suspension est ensuite amenée dans des bassins de décantation où se forment des montagnes de gypse.

Pour obtenir une neutralisation à 90 %, la neutralisation a été opérée pendant ± 225 minutes.

Avec une telle granulométrie, une neutralisation complète exige un large excès de $CaCO_3$. De plus, cette neutralisation est très lente. Les mêmes conclusions ont pu être tirées en utilisant du $MgCO_3$ (granulométrie > 1 cm) au lieu de $CaCO_3$.

## Example 2

On a neutralisé une solution contenant 100 g/l de $H_2SO_4$ au moyen de dolomie dont la granulométrie était supérieure à 1 cm. On a ajouté ± 180 g de dolomie par litre de solution de manière à obtenir une neutralisation à 90 % en plus ou moins 200 minutes.

En fait le carbonate de magnésium n'a pas ou quasi pas réagi avec l'acide sulfurique.

Exemple 3

On a neutralisé une solution contenant 100 g/l de $H_2SO_4$ au moyen de dolomie broyée de manière à avoir les caractéristiques suivantes : diamètre moyen = 10 µm ($d_{50}$) ; fraction passante à 70 µm : ± 100% ; fraction passante à 40 µm ($\phi_{90\%}$) : ± 90% ; fraction passante à 30 µm ($\phi_{80\%}$) : 80% ; fraction passante à 1 µm ($\phi_{10\%}$) : 10% ; fraction passante à 2 µm ($\phi_{20\%}$) : 20% ; facteur de répartition granulométrique à 90% :

$$\frac{\phi_{90\%} - \phi_{10\%}}{(\phi_{90\%} + \phi_{10\%})/2} = \frac{40 - 1}{(40 + 1)/2} = +/- 2$$

facteur de répartition granulométrique à 80% :

$$\frac{\phi_{80\%} - \phi_{20\%}}{(\phi_{80\%} + \phi_{20\%})/2} = \frac{30 - 2}{(30 + 2)/2} = +/- 2$$

c'est-à-dire une répartition large ou étalée.
On a ajouté ± 90 g de dolomie/l en moins de 50 minutes pour obtenir une neutralisation à plus de 90 %.
La neutralisation peut être schématisée comme suit :

$CaCO_3.MgCO_3 + 2H_2SO_4 + 2H_2O \rightarrow CaSO_4.2H_2O$ (solide) $+ 2CO_2 \uparrow + MgSO_4$ (solution) $+ 2H_2O$.

Par filtration, on a séparé le gypse formé d'une solution de sulfate de magnésium. On a ainsi récupéré ± 86 g de $CaSO_4.2H_2O$ par litre de solution traitée et une solution contenant ± 65 g/l de $MgSO_4$.
Cette solution a été soumise à évaporation pour obtenir du sulfate de magnésium dihydrate.
Par rapport à l'exemple 1, la quantité de gypse était deux fois moindre.

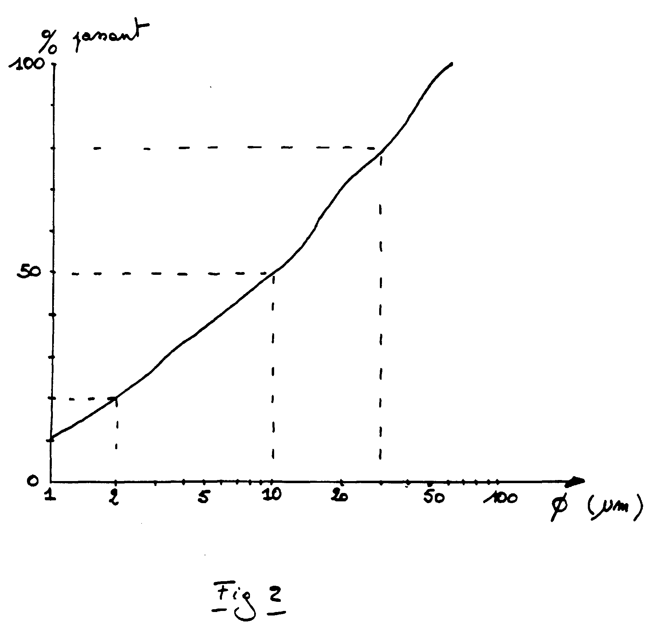

La figure 2 ci-jointe donne le % de la fraction passante en fonction du diamètre (courbe granulométrique) des particules de dolomie utilisées. Ainsi qu'on peut le remarquer de cette figure, le facteur granulométrique à 90%, à 80%, à 70%, mais même à 60% est sensiblement constant (± 2), c'est-à-dire que les particules sont bien réparties selon leur granulométrie.

Exemple 4

On a répété l'exemple 3, si ce n'est qu'après la réaction avec la dolomie, on a ajouté 10 g de CaO.MgO par litre de solution pour assurer une neutralisation complète.

Exemple 5

On a répété l'exemple 3, si ce n'est qu'après la réaction avec la dolomie, on a ajouté 10 g de $Ca(OH)_2$ par litre de solution.

Exemple 6

On a répété l'exemple 3 si ce n'est qu'après la réaction avec la dolomie broyée, on a ajouté 7 g/l de CaO.MgO.

Exemple 7

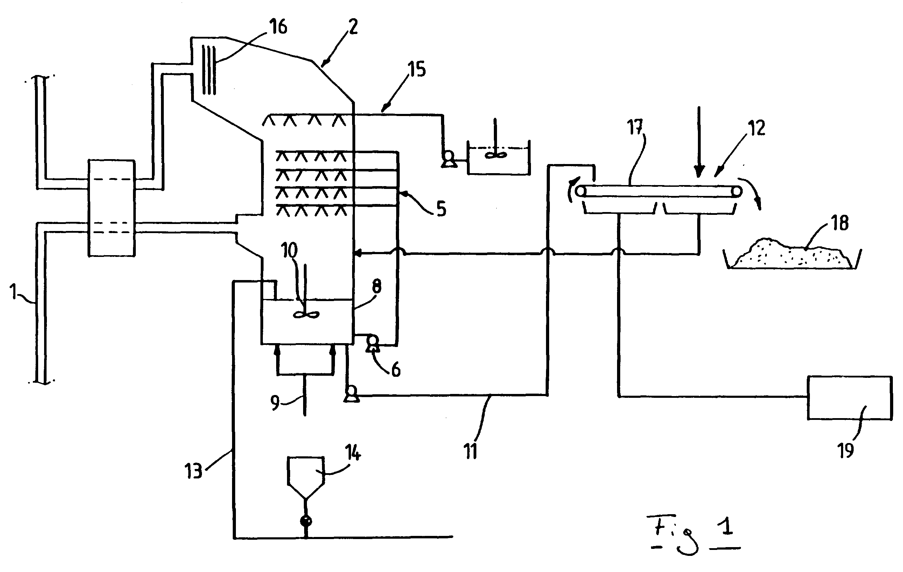

On a répété l'exemple 3, si ce n'est qu'on a utilisé de la dolomie cuite en fin de neutralisation au moyen de dolomie.
Une installation de traitement selon l'invention est représentée en figure 1.
Cette installation comprend une amenée 1 des fumées à traiter 1 vers une unité de traitement 2, une évacuation 3 des fumées traitées sortant de l'unité 2, avantageusement un échangeur de chaleur 4 abaissant la température des fumées à traiter et réchauffant les fumées traitées, un système 5 avec pompe 6 et dispositif de pulvérisation 7 d'une solution aqueuse contenant des agents de neutralisation, une cuve 8 située en bas de l'unité 4 destinée à recueillir un liquide de traitement, un système de mélange 9 du liquide contenu dans la cuve 8 par injection d'air ou d'oxygène, un mélangeur 10, un conduit 11 pour soutirer du liquide hors de la cuve 8 vers une unité de séparation solide-liquide 12, un dispositif 13 d'amenée pneumatique de $CaCO_3.MgCO_3$ broyée (du tank 14) vers la cuve 8, un système 15 pour pulvériser dans les fumées traitées au moyen de $CaCO_3.MgCO_3$ un lait de chaux($Ca(OH)_2$-$Mg(OH)_2$), qui après réaction tombe dans la cuve 8 des filtres 16 pour récupérer des particules éventuellement emportées par les fumées.

La phase liquide contenant le sulfate de magnésium est recyclée (pompe 6) en tête de procès en vue d'enrichissement jusqu'à une concentration "Ci" proche de la saturation en $MgSO_4$ à la température de traitement. Après n recyclages, la solution mère de concentration Ci est dirigée vers une installation 12 de cristallisation de manière à produire le sous produit valorisable $MgSO_4xH_2O$ ou la solution mère est dirigée partiellement vers l'installation 12. La température de cette phase liquide est avantageusement maintenue endessous de 90°C, de préférence entre 50 et 90°C (par exemple 75°C). De plus la phase liquide est avantageusement soumise à un barbotage d'une phase gazeuse contenant de l'$O_2$, par exemple de l'air (unité de barbotage 9). Ce barbotage permet de maintenir la température de la phase liquide sous une température maximale déterminée et d'assurer la conversion de $Mg(HSO_3)_2$ en $MgSO_4$.

L'unité 12 comporte un filtre à bande 17 permettant de récupérer une phase liquide riche en $MgSO_4$. Le gypse $CaSO_4.2H_2O$ reste sur le filtre à bande 17 par lequel il est amené vers une zone de rejet ou de stockage 18 et sur lequel il est éventuellement lavé par de l'eau. La phase liquide riche en $MgSO_4$ est envoyée vers une installation de cristallisation 19 de $MgSO_4.x\,H_2O$. Cette installation si elle ne permet qu'une cristallisation partielle du $MgSO_4.x\,H_2O$ présente un système de recirculation de la phase liquide contenant du $MgSO_4$ non cristallisé.

La phase liquide provenant du lavage est avantageusement recyclée vers la cuve 8.

## Revendications

1. Procédé de traitement par voie humide d'effluents contenant du $H_2SO_4$, du $SO_2$ libre, du $SO_3^-$ ou du $SO_4^=$ et présentant un pH inférieur à 5, dans lequel on fait réagir ces effluents avec un composé basique, dans lequel on utilise des particules de $CaCO_3.MgCO_3$ et/ou de $MgCO_3$ ou un mélange de celles-ci, éventuellement en mélange à du $CaCO_3$, pour traiter lesdits effluents, lesdites particules ayant une granulométrie telle qu'au moins 95 % des particules de $CaCO_3.MgCO_3$ et/ou $MgCO_3$ présente une granulométrie inférieure à 75 $\mu$m, et dans lequel on récupère après traitement du sulfate de magnésium sous forme de solution ou de saumure.

2. Procédé suivant la revendication 1, caractérisé en ce que lesdites particules de $CaCO_3.MgCO_3$ et/ou $MgCO_3$ ont une granulométrie telle qu'environ 100% des particules ont une granulométrie inférieure à 75 $\mu$m.

3. Procédé suivant la revendication 1 ou 2, caractérisé en ce que les particules de $MgCO_3$ et/ou $CaCO_3.MgCO_3$ présentent un diamètre médian ($d_{50}$) compris entre 3 et 30 $\mu$m.

4. Procédé suivant la revendication 3, caractérisé en ce que les particules de $MgCO_3$ et/ou $CaCO_3.MgCO_3$ présentent un diamètre médian ($d_{50}$) compris entre 5 et 20 $\mu$m.

5. Procédé suivant la revendication 3, caractérisé en ce que les particules de $MgCO_3$ et/ou $CaCO_3.MgCO_3$ présentent un diamètre médian d'environ 10 $\mu$m.

6. Procédé suivant l'une quelconque des revendications 1 à 5, caractérisé en ce que les particules de $MgCO_3$ et/ou $CaCO_3.MgCO_3$ présentent un facteur granulométrique à 80% supérieur à 1,5.

7. Procédé suivant l'une quelconque des revendications 1 à 5, caractérisé en ce que les particules de $MgCO_3$ et/ou $CaCO_3.MgCO_3$ présentent un facteur granulométrique à 90% supérieur à 1,5.

8. Procédé suivant l'une quelconque des revendications 1 à 5, caractérisé en ce que les particules de $MgCO_3$ et/ou $CaCO_3.MgCO_3$ présentent un facteur granulométrique à 80% supérieur à 1,9.

9. Procédé suivant l'une quelconque des revendications 1 à 5, caractérisé en ce que les particules de $MgCO_3$ et/ou $CaCO_3.MgCO_3$ présentent un facteur granulométrique à 90% supérieur à 1,9.

10. Procédé suivant l'une quelconque des revendications 1 à 9, dans lequel on traite les effluents acides dans une première étape au moyen de particules de $CaCO_3.MgCO_3$ et/ou $MgCO_3$ et dans une deuxième étape au moyen d'un oxyde et/ou hydroxyde d'un métal alcalin ou alcalino-terreux.

**11.** Procédé suivant la revendication 10, caractérisé en ce que l'oxyde et/ou hydroxyde de métal alcalin ou alcalino-terreux est choisi parmi $Ca(OH)_2$, $Mg(OH)_2$, CaO, MgO, CaO.MgO, $Ca(OH)_2.Mg(OH)_2$ ou un mélange de ceux-ci, les laits de chaux ($Ca(OH)_2$ ; $Mg(OH)_2$ ; $Ca(OH)_2.Mg(OH)_2$).

**12.** Procédé suivant la revendication 10 ou 11, caractérisé en ce qu'on traite les effluents dans la première étape jusqu'à l'obtention d'un pH compris entre 3 et 5 et dans la deuxième étape jusqu'à l'obtention d'un pH supérieur à 6, de préférence voisin de 7.

**13.** Procédé suivant l'une quelconque des revendications précédentes, caractérisé en ce qu'on récupère en fin de traitement une saumure ou une solution contenant du $MgSO_4$.

**14.** Procédé suivant l'une quelconque des revendications précédentes, caractérisé en ce qu'on traite les effluents acides au moins au moyen d'un composé à base de calcium et en ce qu'on sépare les effluents traités en une phase solide contenant du $CaSO_4$ ou un hydrate de $CaSO_4$ et une phase liquide contenant du $MgSO_4$.

**15.** Procédé suivant la revendication 13 ou 14, caractérisé en ce qu'on concentre la saumure et/ou solution de $MgSO_4$ de manière à obtenir soit une saumure ou solution concentrée, soit des particules de $MgSO_4$ ou de $MgSO_4$ sous forme d'hydrate.

**16.** Procédé suivant l'une quelconque des revendications précédentes, caractérisé :

- en ce qu'on traite les effluents au moyen d'une suspension contenant du $CaCO_3.MgCO_3$ et/ou $MgCO_3$,
- en ce qu'on récupère la suspension après traitement,
- en ce qu'on maintient la température de la suspension après traitement à moins de 90°C, de préférence entre 50 et 90°C;
- en ce qu'on soumet ladite suspension à un barbotage d'un milieu oxygéné, de préférence d'air, et
- en ce qu'on recycle au moins partiellement la suspension pour traiter des effluents.

## Claims

**1.** Method for the wet treatment of effluents containing $H_2SO_4$, free $SO_2$, $SO_3^-$, or $SO_4^=$ and having a pH lower then 5, in which these effluents are reacted with a basic compound, m which particles of $CaCO_3.MgCO_3$ and/or $MgCO_3$ or a mixture of these, possibly mixed with $CaCO_3$, are used for treating the said effluents, the said particles having a particle size such that at least 95% of the particles of $CaCO_3.MgCO_3$ and/or $MgCO_3$ have a particle size smaller than 75 µm, and in which after treatment magnesium sulfate in the form of a solution or brine is recovered.

**2.** Method according to claim 1, characterized in that the said particles of $CaCO_3.MgCO_3$ and/or $MgCO_3$ have a particle size such that about 100% of the particles have a particle size less than 75 µm.

**3.** Method according to claim 1 or 2, characterized in that the particles of $MgCO_3$ and/or $CaCO_3.MgCO_3$ have a median diameter ($d_{50}$) between 3 and 30 µm.

**4.** Method according to claim 3, characterized in that the particles of $MgCO_3$ and/or $CaCO_3.MgCO_3$ have a media diameter ($d_{50}$) between 5 and 20 µm.

**5.** Method according to claim 3, characterized in that the particles of $MgCO_3$ and/or $CaCO_3.MgCO_3$ have a median diameter of about 10 µm.

**6.** Method according to any of the claims 1 to 5, characterized in that the particles of $MgCO_3$ and/or $CaCO_3.MgCO_3$ have a particle size factor at 80% greater than 1.5.

**7.** Method according to any of the claims 1 to 5, characterized in that the particles of $MgCO_3$ and/or $CaCO_3.MgCO_3$ have a particle size factor at 90% greater than 1.5.

**8.** Method according to any of the claims 1 to 5, characterized in that the particles of $MgCO_3$ and/or $CaCO_3.MgCO_3$ have a particle size factor at 80% greater than 1.9.

**9.** Method according to any of the claims 1 to 5, characterized in that the particles of $MgCO_3$ and/or $CaCO_3.MgCO_3$

have a particle size factor at 90% greater than 1.9.

10. Method according to any of the claims 1 to 9, in which the acid effluents are treated in a first step by means of particles of $CaCO_3.MgCO_3$ and/or $MgCO_3$ and in a second step by means of an oxide and/or hydroxide of an alkaline metal or an alkaline-earth metal.

11. Method according to claim 10, characterized in that the the oxide and/or hydroxide of alkaline metal or alkaline-earth metal is selected from $Ca(OH)_2$, $Mg(OH)_2$, $CaO$, $MgO$, $CaO.MgO$, $Ca(OH)_2.Mg(OH)_2$ or a mixture of these, milks of lime ($Ca(OH)_2$; $Mg(OH)_2$; $Ca(OH)_2.Mg(OH)_2$).

12. Method according to claim 10 or 11, characterized in that the effluents are treated in the first step until a pH between 3 and 5 is reached and in the second step until a pH greater than 6, preferably close to 7, is reached.

13. Method according to any of the preceding claims, characterized in that the a brine or a solution containing $MgSO_4$ is recovered at the end of treatment.

14. Method according to any of the preceding claims, characterized in that the acid effluents are treated at least by means of a calcium compound and in that the treated effluents are separated in a solid phase containing $CaSO_4$ or a $CaSO_4$ hydrate and a liquid phase containing $MgSO_4$.

15. Method according to claim 13 or 14, characterized in that the $MgSO_4$ brine and/or solution is concentrated in order to obtain either a brine or a concentrated solution, or $MgSO_4$ particles or $MgSO_4$ in the form of hydrate.

16. Method according to any of the preceding claims, characterized :

   - in that the effluents are treated by means of a suspension containing $CaCO_3.MgCO_3$ and/or $MgCO_3$,
   - in that the suspension is recovered after treatment,
   - in that the temperature of the suspension after treatment is maintained below 90°C, preferably between 50 and 90°C;
   - in that the said suspension is subjected to a bubbling of an oxygenated medium, preferably air, and
   - in that the suspension is at least partially recycled for treating effluents.

**Patentansprüche**

1. Verfahren zur nass-chemischen Behandlung von Abwässern, die $H_2SO_4$, freies $SO_2$, $SO_3^-$ oder $SO_4^{2-}$ enthalten und einen pH-Wert unterhalb von 5 aufweisen, in welchem diese Abwässer mit einer basischen Verbindung umgesetzt werden, in welchem Teilchen von $CaCO_3 \cdot MgCO_3$ und/oder $MgCO_3$ oder ein Gemisch davon, gegebenenfalls im Gemisch mit $CaCO_3$, zur Behandlung der Abwässer verwendet werden, wobei die Teilchen eine solche Korngröße besitzen, daß wenigstens 95% der Teilchen von $CaCO_3 \cdot MgCO_3$ und/oder $MgCO_3$ eine Korngröße unterhalb von 75 μm besitzen, und in welchem Magnesiumsulfat nach der Behandlung in Form einer Lösung oder Salzwasser gewonnen wird.

2. Verfahren nach Anspruch 1, dadurch gekennzeichnet, daß die Teilchen von $CaCO_3 \cdot MgCO_3$ und/oder $MgCO_3$ eine solche Korngröße besitzen, daß ungefähr 100% der Teilchen eine Korngröße unterhalb von 75 μm aufweisen.

3. Verfahren nach Anspruch 1 oder 2, dadurch gekennzeichnet, daß die Teilchen von $MgCO_3$ und/oder $CaCO_3 \cdot MgCO_3$ einen mittleren Durchmesser ($d_{50}$) zwischen 3 und 30 μm aufweisen.

4. Verfahren nach Anspruch 3, dadurch gekennzeichnet, daß die Teilchen von $MgCO_3$ und/oder $CaCO_3 \cdot MgCO_3$ einen mittleren Durchmesser ($d_{50}$) zwischen 5 und 20 μm aufweisen.

5. Verfahren nach Anspruch 3, dadurch gekennzeichnet, daß die Teilchen von $MgCO_3$ und/oder $CaCO_3 \cdot MgCO_3$ einen mittleren Durchmesser von ungefähr 10 μm aufweisen.

6. Verfahren nach einem der Ansprüche 1 bis 5, dadurch gekennzeichnet, daß die Teilchen von $MgCO_3$ und/oder $CaCO_3 \cdot MgCO_3$ einen Korngrößenfaktor bei 80% oberhalb von 1,5 aufweisen.

7. Verfahren nach einem der Ansprüche 1 bis 5, dadurch gekennzeichnet, daß die Teilchen von $MgCO_3$ und/oder

$CaCO_3 \cdot MgCO_3$ einen Korngrößenfaktor bei 90% oberhalb von 1,5 aufweisen.

8. Verfahren nach einem der Ansprüche 1 bis 5, dadurch gekennzeichnet, daß die Teilchen von $MgCO_3$ und/oder $CaCO_3 \cdot MgCO_3$ einen Korngrößenfaktor bei 80% oberhalb von 1,9 aufweisen.

9. Verfahren nach einem der Ansprüche 1 bis 5, dadurch gekennzeichnet, daß die Teilchen von $MgCO_3$ und/oder $CaCO_3 \cdot MgCO_3$ einen Korngrößenfaktor bei 90% oberhalb von 1,9 aufweisen.

10. Verfahren nach einem der Ansprüche 1 bis 9, in welchem die sauren Abwässer in einem ersten Schritt mit Teilchen von $CaCO_3 \cdot MgCO_3$ und/oder $MgCO_3$ und in einem zweiten Schritt mit einem Alkalimetall- oder Erdalkalimetalloxid und/oder -hydroxid behandelt werden.

11. Verfahren nach Anspruch 10, dadurch gekennzeichnet, daß das Alkalimetall- oder Erdalkalimetalloxid und/oder -hydroxid aus $Ca(OH)_2$, $Mg(OH)_2$, $CaO$, $MgO$, $CaO \cdot MgO$, $Ca(OH)_2 \cdot Mg(OH)_2$ oder einem Gemisch davon und aus Kalkmilch ($Ca(OH)_2$; $Mg(OH)_2$; $Ca(OH)_2 \cdot Mg(OH)_2$) ausgewählt wird.

12. Verfahren nach Anspruch 10 oder 11, dadurch gekennzeichnet, daß die Abwässer im ersten Schritt behandelt werden, bis ein pH-Wert zwischen 3 und 5 erreicht wird, und im zweiten Schritt, bis ein pH-Wert oberhalb von 6, vorzugsweise in der Nähe von 7 erhalten wird.

13. Verfahren nach einem der vorstehenden Ansprüche, dadurch gekennzeichnet, daß am Ende der Behandlung ein Salzwasser oder eine Lösung, die $MgSO_4$ enthalten, gewonnen wird.

14. Verfahren nach einem der vorstehenden Ansprüche, dadurch gekennzeichnet, daß die sauren Abwässer wenigstens mit einer Verbindung auf Calcium-Basis behandelt werden, und daß die behandelten Abwässer in eine feste Phase, die $CaSO_4$ oder ein Hydrat von $CaSO_4$ enthält, und eine flüssig Phase, die $MgSO_4$ enthält, aufgetrennt werden.

15. Verfahren nach Anspruch 13 oder 14, dadurch gekennzeichnet, daß das Salzwasser und/oder die $MgSO_4$-Lösung in solcher Weise konzentriert werden, daß ein konzentriertes Salzwasser oder eine konzentrierte Lösung und Teilchen von $MgSO_4$ oder $MgSO_4$-Hydrat erhalten werden.

16. Verfahren nach einem der vorstehenden Ansprüche, dadurch gekennzeichnet:

   - daß die Abwässer mit einer Suspension behandelt werden, die $CaCO_3 \cdot MgCO_3$ und/oder $MgCO_3$ enthält,
   - daß die Suspension nach der Behandlung zurückgewonnen wird,
   - daß die Temperatur der Suspension nach der Behandlung unterhalb von 90°C, vorzugsweise zwischen 50 und 90°C gehalten wird,
   - daß die Suspension mit Sauerstoff, vorzugsweise Luft, durchblasen wird, und
   - daß die Suspension zur Behandlung der Abwässer wenigstens teilweise im Kreislauf geführt wird.

Fig 1

EP 0 783 461 B1

_Fig 2_